# EUROPEAN PATENT APPLICATION

(11) **EP 2 355 387 A1**
(43) Date of publication of application: **10.08.2011**
(21) Application number: 10151843.9
(22) Date of filing: 27.01.2010
(51) Int. Cl.: H04J 3/06, H04L 7/00

(54) **Sample rate converter for encoded data streams**

(71) Applicant: Harman Becker Automotive Systems GmbH, 76307 Karlsbad (DE)
(72) Inventor: Spielbauer, Georg, 94354 Haselbach (DE); Doerbecker, Matthias, 76275 Ettlingen (DE)
(74) Representative: Patentanwälte Westphal, Mussgnug & Partner

(57) **Abstract**

A system for converting the sample rate of asynchronous data packets and providing at least one synchronous data stream is disclosed. The system comprises: a sample rate converter configured to asynchronously receive data, the sample rate converter operating in accordance with a conversion ratio controllable by a control signal; a FIFO buffer coupled to the sample rate converter downstream thereof and receiving resampled data therefrom; and a controller unit configured to monitor the fill level of the FIFO buffer and to adjust the control signal such dependent on the fill level.

## Description

### TECHNICAL FIELD

A sample rate converter for converting asynchronous packet data to a synchronous data stream is disclosed as well as a related method. Such a sample rate conversion may be, for example, usefully employed for converting encoded (e.g. AC-3, DTS, AAC, etc.) audio data packets into synchronously clocked digital audio streams.

### BACKGROUND

In modern multimedia systems multimedia data (i.e. encoded digital audio and/or video data) may be transmitted as an asynchronous stream of data packets. That is, the data is sent over a bus or a network in short bursts as data packets which are not synchronized to a clock signal. Such a clock signal may represent the sample rate of the digital audio streams which are eventually fed to an digital-to-analog converter for audio or video reproduction. Standard sample rate converters can not be used as these require a clock signal from the input which - in the present case of packed wise received and encoded data - is not accessible.

The data packets received from the bus or the network are usually buffered in an input FIFO and provided to a decoder unit (e.g. a DTS decoder) which generates, for example, six digital audio signals (e.g. in case of DTS 5.1 surround sound), wherein the samples are provided asynchronously as short bursts. The length and the time lag between two consecutive bursts my vary dependent on the type of codec used and on the compression ratio of the data. Further the data bursts may be subject to considerable jitter.

Especially when processing more than two audio channels the discontinuous data flow at the output of the decoder requires a very large output buffer (e.g. about 200 kB). However, standard sample rate converters (SRC) which can be obtained at low prices typically do not include buffers which are large enough for the application described above. Finally, the maximum buffer length is limited by a so-called maximum delay between video and corresponding audio stream (Lip-Sync Delay). Delays over 100ms can be perceived as annoying when watching a movie or the like. Consequently, there is a need for an improved system which is capable of converting asynchronous packet data to a synchronous data stream thereby using standard SRC devices.

### SUMMARY

A system for converting the sample rate of asynchronous data packets and providing at least one synchronous data stream is disclosed. The system comprises: a sample rate converter configured to asynchronously receive data, the sample rate converter operating in accordance with a conversion ratio controllable by a control signal; a FIFO buffer coupled to the sample rate converter upstream or downstream thereof; and a controller unit configured to monitor the fill level of the FIFO buffer and to adjust the control signal dependent on the fill level.

### BRIEF DESCRIPTION OF THE DRAWINGS

The invention can be better understood with reference to the following drawings and description. The components in the figures are not necessarily to scale, instead emphasis is placed upon illustrating the principles of the invention. Moreover, in the figures, like reference numerals designate corresponding parts. In the drawings:
- FIG. 1: is a simplified block diagram of a system for converting the sample rate of asynchronous data packets received by an input buffer and for providing the re-sampled data as a synchronous data stream;
- FIG. 2: is a simplified block diagram illustrating one implementation of the example of FIG. 1 including a ratio controller for adjusting the conversion ration of an asynchronous sample rate converter (ASRC);
- FIG. 3: is a block diagram of an alternative system to the system of FIG. 2;
- FIG. 4: is a block diagram illustrating the example of FIG. 2 in more detail;
- FIG. 5: is a block diagram illustrating the controller unit of FIG. 2 in more detail;
- FIG. 6: is a block diagram illustrating the ASRC unit of FIG 1 in more detail; and
- FIG. 7: is a block diagram illustrating the ASRC of FIG. 5 as well as the SRC ration controller and the FIFO buffer of FIG. 1 coupled to the ASRC.

### DETAILED DESCRIPTION

In modern multimedia systems multimedia data (audio and video data) are often encoded before being transmitted over a transmission channel (in form of data packets) or before being stored on a storage media (CD, DVD, Blu-Ray disc, solid state memory, etc.). An exemplary automotive multimedia system is considered as an example. Such systems usually include a data network which connects different components such as, for example, an audio amplifier, data sources (e.g. disc drive, receiver, cellular phone, etc.), user interface, display devices, etc. A very common data network in automotive systems is provided by the media oriented systems transport (MOST) bus, which is designed to be used for interconnecting especially multimedia components in automobiles.

MOST is primarily a synchronous network. A timing master supplies the clock with a synchronous and continuous data signal and all other devices synchronize their operation to this base signal. This technology eliminates the need for buffering and sample rate conversion so that very simple and inexpensive devices can be connected and the hardware of the network interface itself is lean and cost effective. Within the synchronous base data signal, multiple synchronous streaming data channels and a control channel are transported. The control channel is used to set up what streaming data channels the sender and receiver are to used. Once the connection is established, data can flow continuously and no further addressing or processing of packet label information is required. The bandwidth of the streaming data channels is always available and reserved for the dedicated stream so that there are no interruptions, collisions, or slow-downs in the transport of the data stream. This is the optimum mechanism for synchronously delivering streaming data (information that flows continuously) like audio and video.

Computer based data, such as internet traffic or information from a navigation system, are typically sent in short (asynchronous) bursts as packets and are often sent to many different locations. To accommodate such signals, MOST has defined efficient mechanisms for sending asynchronous, packet based data in addition to the control channel and the synchronous streaming data channels. These mechanisms run on top of the permanent synchronous data signal. However, they are completely separate from the control channel and the streaming data channels so that none of them interfere with each other. The asynchronous packet based data transfer is defined in the isochronous transmission protocol specification. In many applications, it may be desirable that multimedia data, especially if it is available in encoded (e.g. AC-3, AAC, DTS, etc.) form, is transported as asynchronous packet based data (e.g. using the isochronous transmission protocol) instead as synchronous audio or video streams. In such cases, it may be necessary to decode received data packets and to perform an asynchronous sample rate conversion on the decoded data.

As the decoded data are provided, due to the operation principles of the used codecs, in the form of a sequence of short bursts of data which additionally may exhibit significant jitter, an audio processor performing the sample rate conversion would require output buffer memory of a considerable size. An rough estimation yielded a required memory of at least 200 kB whereas, in contrast, common audio processors (such as the DA710 of Texas Instruments) only provide a total memory of 256 kB at all. As a result, alternative solutions which operate with standard audio processors without extra memory requirements are desired.

FIG. la illustrates by means of a simplified block diagram the system for decoding packets of encoded data, converting the sample rate f_{S},_{IN} of the decoded data and providing a synchronous data stream by using a FIFO buffer connected downstream to the sample rate converter. In one example, the system comprises an input buffer 10 that asynchronously receives data packets such as packets of encoded (i.e. compressed) audio data. A decoder unit 11 is connected downstream of the input buffer 10. The decoder unit decodes the received data and provides a stream of samples which - if provided in regular intervals defined by the sample rate of the stream - could be directly converted to an analog signal without further processing. In case of audio data the decoder unit 10 usually provides samples of a 16-bit or 24-bit PCM signal. However, the samples are not provided at a constant clock rate equal to the sample rate of the decoded data but are rather provided as short bursts occurring at irregular internals. Further, a significant jitter can be observed. Due to the operating principle of the codec executed in the decoder unit 11 the decoder unit provides bursts of 256 samples up to 4 kilosamples per audio channel dependent on the codec used (one sample usually comprises 32 bits).

An asynchronous sample rate converter 12 (ASRC) is coupled downstream of the decoder unit 11. The ASRC 12 is configured to receive the above mentioned bursts of samples an convert the associated input sample rate to an output sample rate in accordance with an desired conversion ratio. For example, the input data may have a sample rate of 48 kHz or 32 kHz wherein the desired output sample rate is 44.1 kHz. However, as the data are usually available in the form of bursts an output buffer (FIFO buffer 13) is coupled to the ASRC 12 downstream thereof where the resampled samples can be synchronously read at the desired clock rate (i.e. the output sample rate).

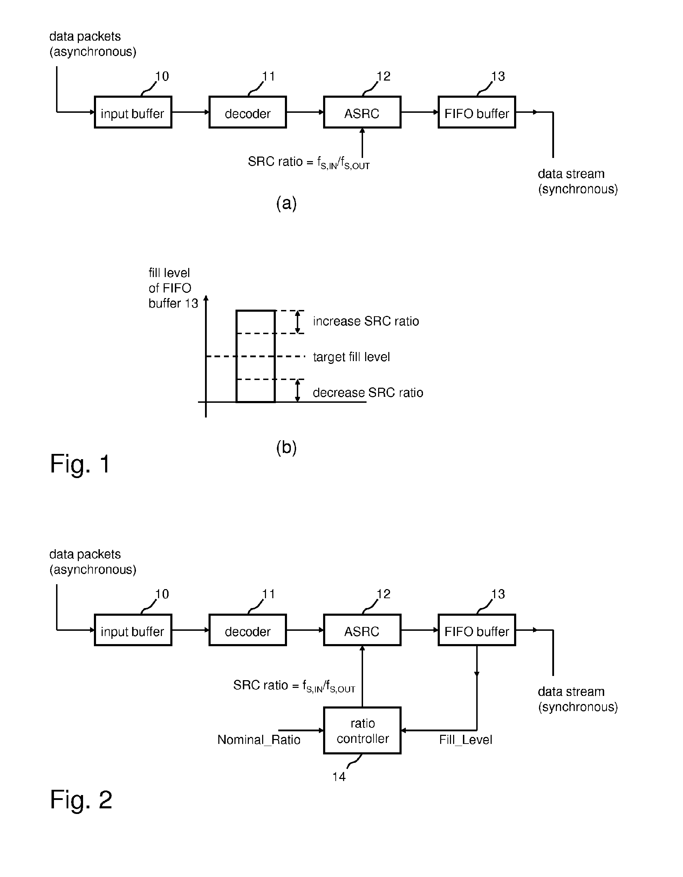

In order to prevent an overflow or an underrun of the FIFO buffer 13, the fill level of the buffer may be monitored. This can easily be performed by checking the read and write pointers of the FIFO. Dependent on the fill level of the buffer 13 the conversion rate of the sample rate converter may be adjusted such that the actual fill level stays at or close to a desired fill level. The control principle of the conversion rate is illustrated in the diagram of FIG 1b.

Accordingly, the conversion rate and thus the output sample rate F_{S},_{OUT} of the ASRC 12 is adjusted such that the fill level of the buffer approaches a desired target fill level. When the fill level of the buffer 13 exceeds a given threshold the conversion ratio is increased (which entails a decrease of the output sample rate f_{S},_{OUT)}. Analogously, when the fill level of the buffer 13 falls below a given threshold, then the conversion ratio is decreased (which entails an increase of the output sample rate F_{S},_{OUT}) -

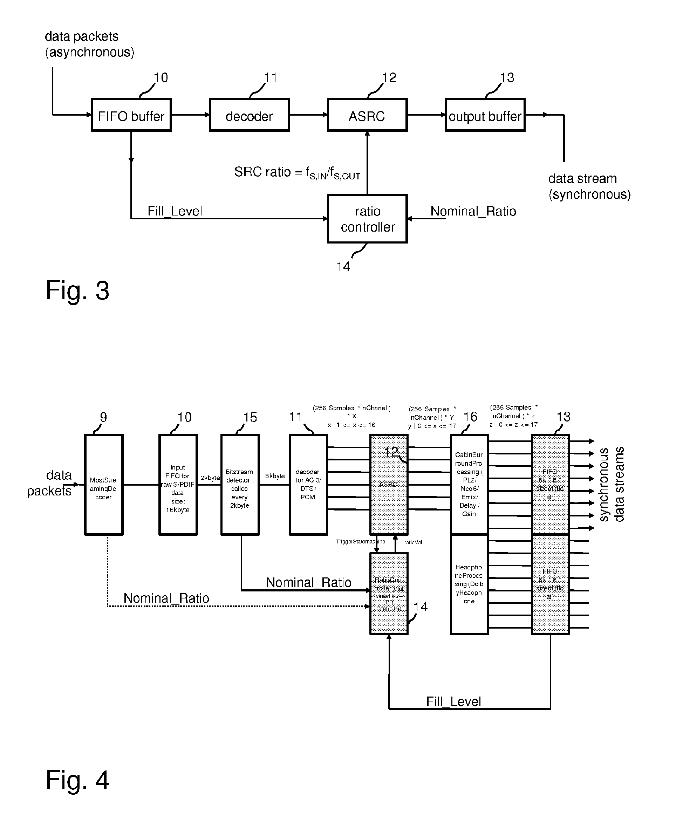

FIG. 2 illustrates the conversion ratio control disclosed above in more detail. A controller unit 14 is coupled between the buffer 13 and the ASRC 12 and configured to receive a signal representative of the fill level "Fill_Level" of the buffer 13 and to provide a representative of the conversion factor provided to the ASRC 12. Additionally, the controller unit 14 is supplied with a desired nominal conversion ratio "Nominal_Ratio" such as, for example 48kHz/44.1kHz. The nominal conversion ratio is calculated as the ratio fS,IN,NOM/f_{S},OUT,NOM of nominal input sample rate f_{S},_{IN},_{NOM} and nominal output sample rate f_{S},_{OUT},_{NOM}. The nominal input sample rate f_{S},_{IN},_{NOM} may, for example, be obtained from the decoder which decodes the data packets from the isochronous MOST channel (see bus interface 9 in FIG. 4). The nominal output sample rate may be determined from the clock of a synchronous MOST channel. The controller is further configured to adjust (to "fine-tune") the conversion ratio dependent on the fill level so as to force the fill level to stay within an interval around a target fill level. For this task the controller unit 14 may include one of the following: a P-controller, a PI-controller, a PD-controller, or a PID-controller. One example illustrating the details of a controller 14 is explained further below with reference to FIG. 4.

The FIFO buffer 13 necessarily needs not to be coupled downstream of the ASRC 12 but could also be positioned in the signal processing chain upstream of the ASRC 12. In principle, any position in the signal processing chain might be possible. FIG. 3 illustrates an alternative to the system of FIG. 2. In this example the fill level of the input buffer (FIFO 10) is controlled by means of the controller unit 14.

FIG. 4 illustrates another example of an audio signal processing system for converting the sample rate of asynchronous data packets and providing several synchronous data streams for surround sound reproduction. In the present example encoded audio data (i.e. compressed audio data in any common data format such as AC-3, DTS, etc.) is received from an isochronous MOST channel wherein data packets are provided by the bus interface 9 (MostStreamingDecoder) and supplied to an input buffer 10 (see also FIG. 1). Such buffers may have a size of 16 kB as it is also used for standard S/PDIF interfaces. A bitstream decoder 15 may be coupled to the buffer 10 downstream thereto. The bitstream decoder 15 is adapted to check and analyze the incoming data in order to provide information about the type of codec used to encode the audio data (e.g. AC-3, DTS I, DTS II, etc.)). This information may be supplied to the controller 14 which may determine a nominal conversion ratio (see "Nominal_Ratio" in FIG. 2) therefrom. In the present example the bitstream decoder 15 checks every block of 2 kB. The decoder unit 11 is coupled to the bitstream decoder 15 downstream thereof and thus also receives the input data from the buffer 10. The decoder unit is configured to decode the received data stream using an appropriate codec (as detected by the bitstream decoder 15) thus asynchronously providing one or more streams of decoded audio samples at an input sample rate f_{S},_{IN}. The decoder unit 11 processes, for example, blocks of 8 kB and thus the decoded output data is not provided continuously but in the form of short bursts as already mentioned. Further, the decoded data may be subject to jitter. The decoder unit 11 is regarded as the prime reason for the discontinuous and jittery data flow. In the present example the decoder unit 11 provides six digital audio channels (e.g. front left, front center, front right, rear left, rear right, and sub-woofer in the case an CS-3 5.1 or DTS 5.1 codec is used).

Each decoded digital audio stream is supplied to the ASRC 12 coupled to the decoder unit 11 downstream thereof wherein the conversion ratio is controlled by means of controller unit 14 as explained above with reference to FIG. 2. The nominal conversion ratio "Nominal_Ratio" is derived from the information provided by the bitstream decoder 15. Alternatively, the nominal conversion ratio may also be obtained from the bus interface 9 (see label "MostStreamDecoder" in FIG. 4) which receives the data packets from an asynchronous communication channel.

The ASRC provides resampled audio data which - as its input data - come in the form of short bursts which may be subject to jitter. The resampled audio data may further be subject to some additional surround sound processing (block 16: "Cabin-SourroundProcessing") and/or some audio processing for improving sound reproduction by means of headphones ("HeadphoneProcessing") before being fed into the FIFO buffer 13. The output buffer 13 may have a size of 32 kB (i.e. 8 kilosamples) per audio channel which is regarded as sufficient (in the present example) for synchronously reading the resampled audio data from the FIFO buffer 13 and for further synchronous processing of the audio data streams. For example, the synchronous audio streams could be supplied to a synchronous MOST channel.

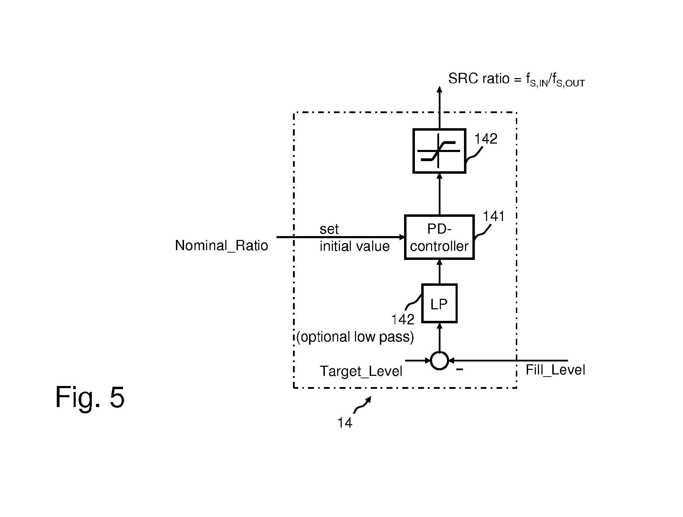

FIG. 5 illustrates the ratio controller unit 14 in more detail. The controller unit 14 includes, for example, a PD-controller 141 which receives as controller input (i.e. as control error signal) the difference between the target fill level of the FIFO buffer 13 and the actual fill level represented by signal Fill_Level. The controller input may additionally be subject to a low pass filtering (low pass 142) in order to smooth the control error signal. The nominal conversion ratio provided, for example, from the bitstream decoder 15 (see FIG. 4) may be used as initial value for the controller output. The proportional (P) component of the controller transfer function applies an offset to the nominal conversion ratio, which is proportional to the difference between the actual buffer fill level and the target fill level. An optional derivative (D) component may increase the adaptation speed of the controller. An optional integrative (I) component ensures that the steady state control error between the actual buffer fill level and the target buffer fill level reaches zero.

Generally, the controller 14 is part of a closed control loop which continuously provides active control during operation of the sample rate converter. By modifying the nominal conversion ration the resampled audio stream is subject to frequency modulation. Such a frequency modulation is inaudible for a human listener if the frequency swing remains below a defined threshold. Psychoacoustic research (see H. Fastl, E. Zwicker, Chapter 7.2: Just-Noticeable Changes in Frequency, in: Psychoacoustics, 3rd edition, Springer, 2007) yielded that, for sine signals with frequencies above about 500 Hz, a frequency swing below about 0.7 percent is inaudible. For sine signals with frequencies below about 500 Hz, the threshold is approximately constant, i.e. a frequency swing below about 3.6 Hz is inaudible. As a consequence, the actual conversion ratio provided by the controller unit 14 should not deviate from the nominal conversion ratio by more than ±0.35% (allowing a total frequency swing of 0.7%) . To be on the safe side the maximum deviation may be set to ±0.2 percent. Thus, in case of a MOST clock of 48 kHz (i.e. the nominal output sample rate) and an input sample rate of 44.1 kHz the actual conversion ratio may be 44.1/48 ± 0.2%. In other words the actual output sample rate may vary from 47904 Hz to 48096 Hz. For this reason the controller unit 14 may include a saturation element 142 coupled to the PD-controller (or PID controller) downstream thereof. The saturation element may confine the actual conversion ratio to a given interval as mentioned above.

The modulation frequency is another issue. It has been found that the human ear is most sensitive to frequency changes at modulation frequencies of about 4 Hz. Thus, it may be desirable to keep the modulation frequency well below 4 Hz. For this reason the spectrum of the controller output of controller unit 14 may be confined to low frequencies, i.e. to frequencies below 4 Hz or even to frequencies below 1 Hz or below 0.5 Hz. Consequently the controller unit 14 is very slow what increases the required size of the FIFO buffer whose fill level is to be controlled. Thus, there is a trade-off between buffer length and controller speed.

It has to be noted that no synchronous clock signal is necessary for sample rate conversion. The stability of the system is ensured by the feed back loop which is always active during operation of the ASRC. Therefore, the conversion ratio control may improve the robustness of the overall system what may be especially desirable in systems coupled to a MOST network. Since a MOST bus has a ring topology the controlled ASRC is insensitive (robust) against temporary interruptions of the ring bus.

The controller unit 14 may further include a state machine for controlling different modes of operation of the controller. For example, the controller may have an active mode wherein conversion ratio control is performed as described above. Further the, controller may have an idle mode wherein the sample rate conversion is stopped and the ASRC 12 outputs zero-value samples.

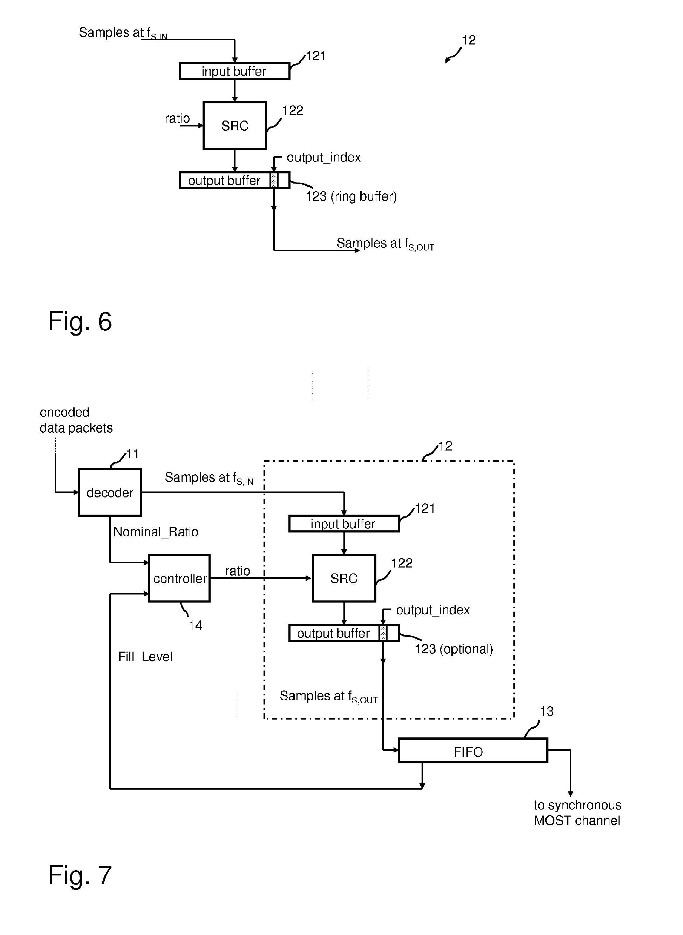

FIG. 6 illustrates by means of a block diagram a standard ASRC unit 12 as used, for example, in the systems of FIGs. 1 to 3. FIG. 7 illustrates the interconnection of the ASRC unit 12 of FIG. 6 with the controller unit 14, the decoder unit 11 and the buffer 13 as already shown in FIG. 2. The sample rate converter 12 receives decoded samples from decoder unit 11 which are typically stored in an input buffer 121 implemented, e.g. as linear buffer, FIFO or ring buffer. The data are then supplied in groups up to 4 kilosamples to the sample rate converter unit 122 which receives the current conversion ratio as an input. The resampled data samples are written to an output buffer 123 whose output is connected to a FIFO buffer 13 whose fill level is used for controlling the conversion ratio as explained above. The FIFO buffer 13 may be read out synchronously in accordance with a clock signal. The resulting synchronous digital audio stream may be supplied to a D/A converter or further transported via a synchronous MOST channel over a MOST network.

Some aspects of the examples described above are highlighted below. According to one example of the invention a method for converting the sample rate of asynchronous data packets and providing at least one synchronous data stream comprises the following: Data having an input sample rate f_{S},_{IN} are asynchronously received from, for example, an isochronous MOST channel. The sampling rate of the data (input sampling rate f_{S},_{IN}) is converted in accordance with a controllable conversion ratio thus providing resampled asynchronous data having an output sample rate f_{S},_{ouT}. The resampled data are buffered in a FIFO buffer, the buffer having a fill level. The resampled data are synchronously read from the buffer in accordance with an output clock. In order to avoid a buffer overflow or a buffer underrun the fill level of the buffer is monitored and the conversion ratio is adjusted dependent on the monitored fill level. The steps of monitoring and adjusting form a permanently active closed control loop which stabilize the sample rate conversion process. The output sample rate F_{S},_{OUT} is adjusted such that the that the fill level of the buffer approaches a desired target fill level. The adjusting of the conversion ratio comprises the employment of a PID transfer control characteristics characterizing the transfer characteristics from the FIFO buffer fill level to the conversion ratio (whereas the I component and/or the D component may be zero). In order to avoid audible distortions the deviation from the actual conversion rate may be limited to a maximum of about 0.2 percent of the nominal rate. The received input data may be encoded audio data which is then decoded in accordance with an audio codec and, thereby generating bursts of decoded digital audio data before the sample rate conversion.

Although the present invention has been described in accordance to the embodiments shown in the figures, one of ordinary skill in the art will recognize there could be variations to these embodiments and those variations should be within the spirit and scope of the present invention. Accordingly, modifications may be made by one ordinarily skilled in the art without departing from the spirit and scope of the appended claims.

## Claims

1. A system for converting the sample rate of asynchronous data packets and providing at least one synchronous data stream; the system comprises:
a sample rate converter configured to asynchronously receive data, the sample rate converter operating in accordance with a conversion ratio controllable by a control signal;
a FIFO buffer coupled to the sample rate converter upstream or downstream thereof; and
a controller unit configured to monitor the fill level of the FIFO buffer and to adjust the control signal such dependent on the fill level.

2. The system of claim 1, where the controller unit is configured to adjust the control signal in order to adjust an output sample rate of the resampled data such that the fill level of the FIFO buffer approaches a desired target fill level.

3. The system of claim 1 or 2, where the controller unit is adapted to operate in accordance with a transfer function that characterizes the transfer characteristics from the FIFO buffer fill level to the conversion ratio, a component of the transfer function representing a PI control characteristic, a PD control characteristic, or a PID control characteristic.

4. The system of one of claims 1 to 3, further comprising:
a decoder unit coupled to the sample rate converter upstream thereof, the decoder unit receiving encoded audio data packets and generating decoded digital audio data using an audio codec.

5. The system of claim 4, further comprising a detector unit arranged upstream of the decoder unit and configured to detect the used audio codec and/or to provide a nominal conversion ratio to the controller unit.

6. The system of one of the claims 1 to 5, where the received asynchronous data are are provided by a MOST stream from an isochronous MOST channel.

7. The system of one of the claims 1 to 6, where the controller unit is configured to only adjust the conversion ratio within a given interval which is small enough that distortions resulting from deviations from a nominal conversion ratio can not be perceived by a human listener.

8. A method for converting the sample rate of asynchronous data packets and providing at least one synchronous data stream; the method comprises:
asynchronously receiving data that have an input sample rate;
buffering the received data using an input buffer;
converting the sampling rate of the data in accordance with a controllable conversion ratio thus providing resampled asynchronous data having an output sample rate;
buffering the resampled data using an output buffer;
synchronously reading the resampled data from the output buffer in accordance with an output clock;
monitoring the fill level of the input buffer or the output buffer; and
adjusting the conversion ratio dependent on the monitored fill level.

9. The method of claim 8, where the adjusting of the conversion ratio comprises:
adjusting the output sample rate such that the that the fill level of the buffer approaches a desired target fill level.

10. The method of claims 8 or 9, further comprising:
decoding the received data in accordance with an audio codec and generating decoded digital audio data before the sample rate conversion.

11. The method of claims 8, 9 or 10, where the output sample rate is adjusted only within a predefined interval that includes a nominal output sample rate.

12. The method of claim 11, where the adjusted conversion ratio deviates from the nominal conversion ratio by a maximum offset of 0.35 percent.

13. The method of one of the claims 1 to 12, where the adjusting of the conversion ratio comprises a PI, a PD or a PID transfer control characteristics charactering the transfer characteristics from the FIFO buffer fill level to the conversion ratio.

14. The method of one of the claims 1 to 12, where the resampled data are transmitted over a synchronous MOST channel in accordance with a clock signal.

15. The method of one of claims 1 to 13, where data packets are received from an isochronous MOST channel and the received packets are decoded into S/PDIF format.
